# EUROPEAN PATENT SPECIFICATION

(11) **EP 4 016 243 B1**
(45) Date of publication and mention of the grant of the patent: **06.03.2024**
(21) Application number: 21744930.5
(22) Date of filing: 06.01.2021
(51) Int. Cl.: G06F 1/16, H04M 1/02

(54) **ELECTRONIC DEVICE**
ELEKTRONISCHE VORRICHTUNG
DISPOSITIF ÉLECTRONIQUE

(30) Priority: 21.01.2020 CN 202010071864
(43) Date of publication of application: 22.06.2022
(73) Proprietor: Honor Device Co., Ltd., Shenzhen, Guangdong 518040 (CN)
(72) Inventor: GUO, Renwei, Shenzhen, Guangdong 518129 (CN); WANG, Xuyang, Shenzhen, Guangdong 518129 (CN); LIU, Yang, Shenzhen, Guangdong 518129 (CN)
(74) Representative: Gill Jennings & Every LLP
(86) International application number: PCT/CN2021/070395
(87) International publication number: WO 2021/147669

(56) References cited:
- WO-A1-2020/000881
- CN-A- 109 256 414
- CN-A- 109 460 113
- CN-U- 204 790 243
- CN-U- 204 790 243
- CN-U- 209 448 765
- KR-A- 20140 001 579
- US-A1- 2016 334 897
- US-A1- 2018 196 476

## Description

### TECHNICAL FIELD

This application relates to the field of electronic device packaging technologies, and in particular, to an electronic device.

### BACKGROUND

With the continuous development of flexible screens, the application of curved screens on electronic devices has become more popular. A curved screen needs to be bonded to a middle frame of an electronic device by using dispensed glue and back glue on both sides.

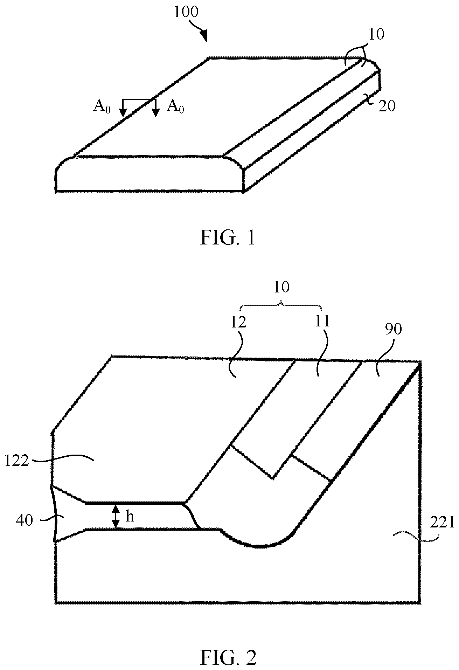

Currently, a common method for bonding a common curved screen (such as a three-dimensional curved screen, 3D curved screen for short) is to bond two side bent positions of a display module 11 of a curved screen 10 to a middle frame 20 of an electronic device such as a mobile phone 100 by using a foam back glue 90, as shown in FIG. 1 and FIG. 2, so as to limit the curved screen 10 in a horizontal direction by using the foam back glue 90. In addition, internal gap-filling glue dispensing is performed on a gap h between two side bent positions 122 of a protective cover plate 12 of the curved screen 10 and the middle frame 20, thereby bonding the curved screen 10 to the electronic device such as a mobile phone 100.

However, because the foam back glue has a degree of elasticity, on one hand, limiting accuracy for the curved screen is insufficient; and on the other hand, the foam back glue will rebound during press-fitting of the curved screen. This may cause a secondary bonding problem of a glue between the protective cover plate and the middle frame, and consequently, bonding effect for the curved screen is affected.

US-A-2016/334897 describes an electronic device with a translucent panel including a front surface and a back surface, the translucent panel including a curved portion at an end portion, the curved portion being curved toward the back surface with respect to a central portion of the translucent panel. The electronic device also includes a touch panel located on the back surface of the translucent panel and configured to be covered with the central portion and the curved portion.

The distance between the curved portion and the touch panel is shorter than the distance between the central portion of the translucent panel and the touch panel.

WO-A-2020/000881 describes an electronic apparatus, comprising a flexible display panel and a support for supporting the flexible display panel; wherein the flexible display panel has a display area and a peripheral area, and an edge groove in the peripheral area defining an edge portion of the flexible display panel, the edge portion being on a side of the edge groove distal to the display area; wherein the support has a first support groove configured to receive the edge portion of the flexible display panel; and wherein the flexible display panel is bent about the edge groove, facilitating insertion of the edge portion of the flexible display panel into the first support groove.

### SUMMARY

This application provides an electronic device, so as to improve horizontal limiting effect for a protective cover plate and a curved screen and bonding effect for the curved screen.

An embodiment of this application provides an electronic device as defined in claim 1.

In this way, by arranging the limiting structures on the two side frames of the middle frame, on one hand, a position shift that occurs when the curved screen is bonded to the middle frame can be avoided, which helps to improve horizontal limiting precision and limiting effect for the protective cover plate and the curved screen, and on the other hand, secondary bonding of the glue between the two curved sides of the protective cover plate and the bonding end surfaces can be avoided, thereby improving bonding strength and bonding effect for the curved screen, and increasing a success rate of bonding and a pass rate of the electronic device such as a mobile phone after bonding. In addition, by filling, with the glue, the gap between the bonding end surfaces and the curved sides of the protective cover plate, a sealed connection between the curved screen and the middle frame can be achieved.

The limiting portions project toward the curved screen, so that the two curved sides of the protective cover plate can be avoided moving in a horizontal direction, horizontal limiting for the protective cover plate and the curved screen can be achieved, and the curved screen can be well bonded.

In a possible implementation, the limiting portions have an inclined surface that is parallel to an inner surface of the protective cover plate, and the inner surface of the protective cover plate is bonded to the inclined surfaces of the limiting portions by using the glue.

In this way, through arrangement of the inclined surfaces of the limiting portions, on one hand, the inclined surfaces can be matched with the inner surface of the protective cover plate, thereby providing a better limiting effect for the protective cover plate and the curved screen; and on the other hand, a glue can be evenly filled between the inner surface of the protective cover plate and the inclined surfaces of the limiting portions, thereby improving bonding effect of the protective cover plate and the limiting portions.

The limiting structures further include a supporting portion, at least a part of the supporting portion is located in the gap, and ends of the curved sides of the protective cover plate are bonded to the supporting portions by using the glue.

In this way, through supporting of the supporting portions, on one hand, it can be convenient to fill, with a glue, the gap between the bonding end surfaces and the curved sides of the protective cover plate, thereby achieving bonding of the curved screen and the middle frame, and an electronic device is given a sealing performance; on the other hand, the protective cover plate and the curved screen can be limited by the limiting structures in a vertical direction.

In a possible implementation, the side frames have a groove on one end facing the curved screen, and a groove wall of this groove is connected to the bonding end surface, and in this way, overflowing of excess glue in the gap into the groove can be facilitated, and poor appearance of an electronic device such as a mobile phone due to the overflowing of the glue is avoided.

In a possible implementation, the bonding end surfaces are provided with an inclined counter groove, the inclined counter groove includes an inclined groove wall that is inclined toward the groove, and two ends of the inclined groove wall are respectively connected to the groove wall of the groove and the bonding end surface.

In this way, through arrangement of the inclined counter groove, on one hand, damage to appearance of an electronic device such as a mobile phone due to excess glue during glue dispensing can be avoided, and on the other hand, a length of the bonding end surface can be increased so that an effective bonding surface on the bonding end surface is larger, thereby improving bonding strength and reliability of the two curved sides of the protective cover plate and the side frames.

In a possible implementation, the bonding end surfaces have a first inclined surface that is disposed near a side of the outer side of the side frame, and the first inclined surface is inclined toward a direction away from the protective cover plate. In this way, spacing between the outer sides of the two curved sides of the protective cover plate and the outer sides of the side frames can be larger, so that the curved screen can be bonded to the side frames through glue dispensing or potting.

In a possible implementation, the protective cover plate has a second inclined surface facing toward the bonding end surface, where the second inclined surface is arranged opposite to the first inclined surface and is inclined in a direction facing away from the bonding end surfaces.

In this way, the second inclined surface and the first inclined surface form a glue-feeding seam on a side of an electronic device such as a mobile phone, a width of the glue-feeding seam is gradually reduced in a direction toward an inside of the electronic device, the curved screen can be bonded to the side frames conveniently through glue dispensing or potting, and a glue can be avoided flowing too fast in the glue-feeding seam.

In a possible implementation, a side of the bonding end surfaces near the outer sides of the side frames has a third inclined surface, the third inclined surface is an inclined surface inclined in a direction facing toward the protective cover plate, the protective cover plate is provided with a fourth inclined surface, and the protective cover plate is bonded to the third inclined surface through this fourth inclined surface. In this way, spacing between the outer sides of the two curved sides of the protective cover plate and the outer sides of the side frames is larger, so that an electronic device such as a mobile phone has a better appearance.

In a possible implementation, the limiting structures may include a plurality of limiting seats arranged at intervals, and the plurality of limiting seats are arranged in a straight line near a side edge of an inside of the electronic device along the bonding end surfaces; or,
the limiting structures may be a limiting seat in a bar shape that extend along one end of the bonding end surfaces to the other end of the bonding end surfaces.

In this way, through arrangement of the limiting seats on the bonding end surfaces, on one hand, the protective cover plate and the curved screen can be limited in both horizontal and vertical directions, which provides a better limiting effect, and on the other hand, while bonding area of the bonding end surface relative to the two curved sides of the protective cover plate can be increased, a more diverse arrangement mode is provided for the limiting structures.

In a possible implementation, the limiting structure on one side frame and the limiting structure on the other side frame are arranged symmetrically. In this way, the protective cover plate and the curved screen can be limited in both horizontal and vertical directions by the symmetrical limiting structures on the two side frames.

In a possible implementation, the curved screen is a 3D curved screen, and the protective cover plate is a 3D curved glass cover plate. In this way, on one hand, an electronic device such as mobile phone has a more three-dimensional appearance than an ordinary mobile phone with a flat (that is, 2D) screen, and on the other hand, the 3D curved glass cover has a better protective effect for the display module.

### BRIEF DESCRIPTION OF DRAWINGS

FIG. 1 is a schematic structural diagram of an electronic device in the prior art;
FIG. 2 is a partial cross-sectional view in A₀-A₀ direction in FIG. 1;
FIG. 3 is a schematic structural diagram of an electronic device according to an embodiment of this application;
FIG. 4a is a breakdown schematic structural diagram of an electronic device as a mobile phone according to an embodiment of this application;
FIG. 4b is a breakdown schematic structural diagram of a curved screen of an electronic device as a mobile phone according to an embodiment of this application;
FIG. 5 is a front schematic structural diagram of an electronic device according to an embodiment of this application;
FIG. 6 is a partial cross-sectional view in A-A direction in FIG. 5 according to an embodiment of this application;
FIG. 7a is a partial enlarged view of A₁ part of an electronic device in FIG. 6 according to an embodiment of this application;
FIG. 7b is a schematic structural diagram of an electronic device in FIG.7a after glue dispensing according to an embodiment of this application;
FIG. 7c is a partial enlarged view of A₁ part of another electronic device in FIG. 6 according to an embodiment of this application;
FIG. 8 is a schematic diagram of a limiting structure according to an embodiment of this application;
FIG. 9 is a schematic diagram of another limiting structure according to an embodiment of this application;
FIG. 10 is a partial schematic diagram of a middle frame according to an embodiment of this application;
FIG. 11 is a partial enlarged view of A₂ part of an electronic device in FIG. 6 according to an embodiment of this application;
FIG. 12 is a partial enlarged view of A₁ part of another electronic device in FIG. 6 according to an embodiment of this application;
FIG. 13 is a schematic diagram of another limiting structure according to an embodiment of this application;
FIG. 14 is a schematic structural diagram of an electronic device in FIG.12 after glue dispensing according to an embodiment of this application;
FIG. 15 is a partial enlarged view of A₁ part of another electronic device in FIG. 6 according to an embodiment of this application;
FIG. 16 is a schematic structural diagram of an electronic device in FIG. 15 after glue dispensing according to an embodiment of this application; and
FIG. 17 is a schematic flowchart of a bonding method for a screen according to an embodiment of this application.

### Description of reference numerals:

100-mobile phone; 10-curved screen; 11-display module; 12-protective cover plate; 121-curved side; 1211-end; 1212a-second inclined surface; 1212b-fourth inclined surface; 1213-inner surface; 122-two side bent positions; 20-middle frame; 21-metal middle plate; 22-frame; 221-side frame; 221a-left side frame; 221b-right side frame; 2211-bonding end surface; 22111-horizontal surface; 22112a-first inclined surface; 22112b-third inclined surface; 2212-groove; 2213-supporting protrusion; 2214-inclined counter groove; 30-limiting structure; 31-limiting portion; 311-inclined surface; 32-supporting part; 33-limiting seat; 40-glue; 50-glue-feeding seam; 60-circuit board; 70-battery; 80-back cover; 90-foam back glue.

### DESCRIPTION OF EMBODIMENTS

Some terms used in embodiments of this application are used to merely explain the embodiments of this application, and are not intended to limit this application.

As described in Background, referring to FIG. 1 and FIG. 2, by applying a foam back glue 90 and performing gap-filling glue dispensing on two sides for two curved sides of a curved screen 10 (such as a 3D curved screen), the curved screen 10 is bonded to an electronic device such as a mobile phone 100. Because the foam back glue 90 has a elasticity, on one hand, limiting accuracy for the curved screen is not enough; on the other hand, the foam back glue 90 will rebound during press-fitting of the curved screen 10, a glue 40 between a protective cover plate 12 and side frames 221 of a middle frame 20 will be stretched when the foam back glue 90 rebounds, and a bonding effect between the protective cover plate 12 and the side frames 221 becomes worse. This may cause a secondary bonding problem and affect an overall bonding effect of the curved screen 10. To this end, an embodiment of this application provides an electronic device, so as to improve a bonding effect of a curved screen in the electronic device while limiting the curved screen in a horizontal direction.

In this embodiment, the electronic device may be, but not limited to, a mobile phone, a tablet computer, a notebook computer, an ultra-mobile personal computer (ultra-mobile personal computer, UMPC for short), a handheld computer, an intercom, a netbook, a POS machine, a personal digital assistant (personal digital assistant, PDA for short), a wearable device, a virtual reality device, or another mobile or fixed terminal having a curved screen.

In the following embodiments of this application, a mobile phone is used as an example to further illustrate an electronic device with a curved screen in this application.

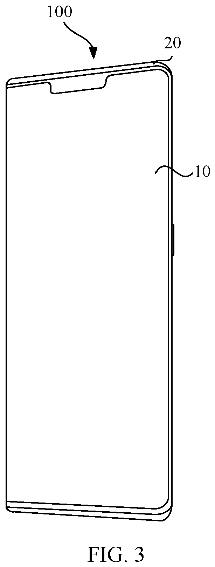

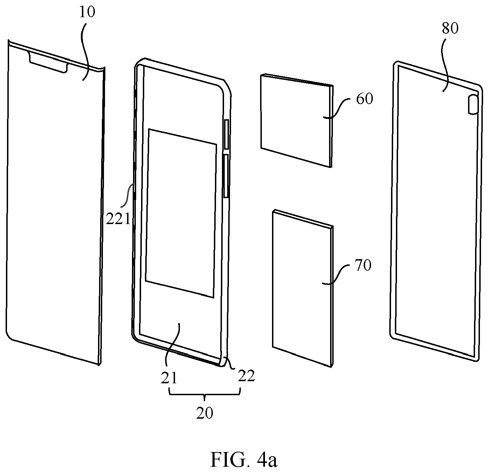

FIG. 3 is a schematic structural diagram of an electronic device according to an embodiment of this application, and FIG. 4a is a breakdown schematic structural diagram of an electronic device as a mobile phone according to an embodiment of this application.

Referring to FIG. 3 and FIG. 4a, in an embodiment of this application, a mobile phone 100 as the above electronic device is used as an example for description. FIG. 3 and FIG. 4a show the overall and breakdown structures of the mobile phone 100. The curved screen 10 of the mobile phone 100 according to this embodiment of this application may be a waterdrop screen, a notch screen, a punch-hole screen, or another full screen. The following description uses the notch screen as an example for illustration. Referring to FIG. 3 and FIG. 4a, the mobile phone 100 may include a curved screen 10 and a back cover 80. A middle frame 20, a circuit board 60 and a battery 70 may be arranged between the curved screen 10 and the back cover 80. The circuit board 60 and the battery 70 may be arranged on the middle frame 20. For example, the circuit board 60 and the battery 70 may be arranged on a side of the middle frame 20 facing toward the back cover 80, or the circuit board 60 and the battery 70 may be arranged on a side of the middle frame 20 facing toward the curved screen 10.

The battery 70 may be connected to a charging management module and the circuit board 60 by using a power management module. The power management module receives an input from the battery 70 and/or the charging management module, and supplies power to a processor, an internal memory, an external memory, the curved screen 10, cameras, a communication module and the like. The power management module may be further configured to monitor parameters such battery 70 capacity, battery 70 cycles, and battery 70 state of health (leakage, impedance). In some other embodiments, the power management module may alternatively be disposed in a processor of the circuit board 60. In some other embodiments, the power management module and the charging management module may alternatively be disposed in a same component.

The curved screen 10 may be configured to display information input by a user, information provided for the user, and various menus of the electronic device, and may receive a user input. The curved screen 10 may be an organic light-emitting diode (Organic Light-Emitting Diode, OLED for short) curved screen or a curved screen made of other materials.

The back cover 80 may be a metal back cover, a glass back cover, a plastic back cover, or a ceramic back cover. In this embodiment of this application, a material of the back cover 80 is not limited. The middle frame 20 may include a metal middle plate 21 and a frame 22. The frame 22 is arranged around a periphery of the metal middle plate 21. In general, the frame 22 may include a top frame, a bottom frame, a left side frame, and a right side frame. The top frame, the bottom frame, the left side frame, and the right side frame enclose the frame 22 of a square-ring structure. The metal middle plate 21 may be an aluminum plate, and may be of aluminum alloy, or magnesium alloy. The frame 22 may be a metal frame or a ceramic frame. The metal middle frame 20 and the frame 22 can be clamped, welded, bonded or integrally formed, or the metal middle frame 20 and the frame 22 are fixedly connected by injection molding.

It should be noted that, in some examples, the back cover 80 of the mobile phone 100 may be connected to the frame 22 to form a unibody (unibody) back cover. For example, the mobile phone 100 may include: a curved screen 10, a metal middle plate 21, and a battery cover. The battery cover may be a back cover formed by a unibody (unibody) of the frame 22 and the back cover 80. In this way, the circuit board 60 and the battery 70 are located in a space enclosed by the metal middle plate 21 and the battery 70 cover.

It may be understood that the structures illustrated in the embodiments of this application do not constitute a specific limitation on the mobile phone 100. In some other embodiments of this application, the mobile phone 100 may include more or fewer components than those shown in the figure, combine some components, or split some components, or have a different component arrangement. The illustrated components may be implemented by hardware, software, or a combination of software and hardware.

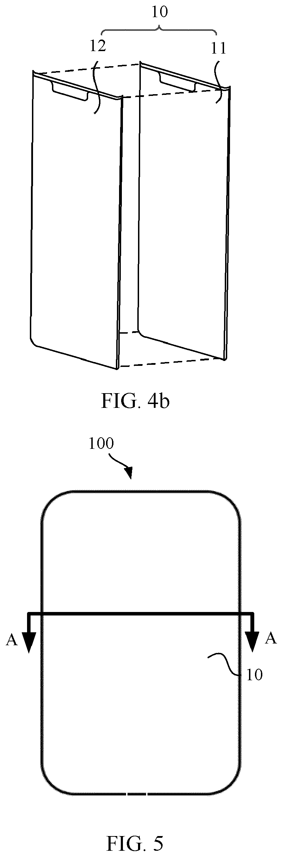

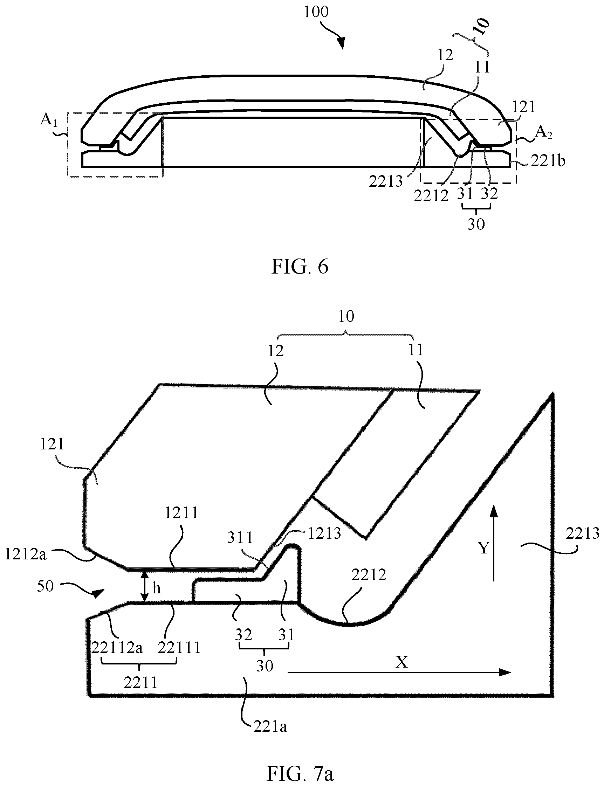

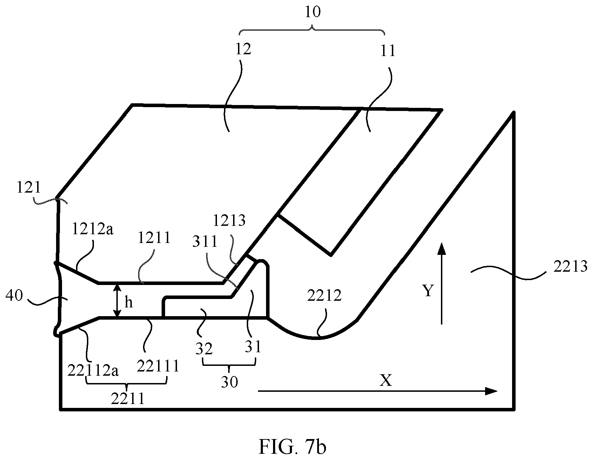

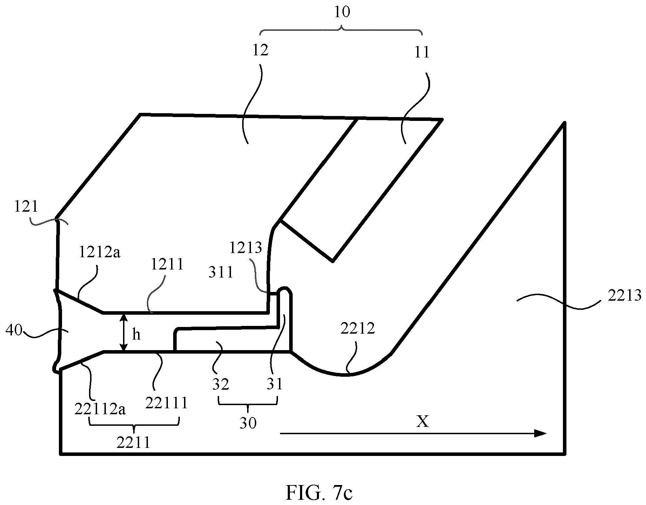

An electronic device with a curved screen 10 in this application will be further explained below. FIG. 4b is a breakdown schematic structural diagram of a curved screen of an electronic device as a mobile phone according to an embodiment of this application; FIG. 5 is a front schematic structural diagram of an electronic device according to an embodiment of this application; FIG. 6 is a partial cross-sectional view in A-A direction in FIG. 5 according to an embodiment of this application; FIG. 7a is a partial enlarged view of A₁ part of an electronic device in FIG. 6 according to an embodiment of this application; FIG. 7b is a schematic structural diagram of an electronic device in FIG.7a after glue dispensing according to an embodiment of this application; and FIG. 7c is a partial enlarged view of A₁ part of another electronic device in FIG. 6 according to an embodiment of this application.

Referring to FIG. 4b to FIG. 7c, the electronic device includes a middle frame 20 and a curved screen 10. The curved screen 10 includes a display module 11 and a protective cover plate 12 attached to the display module 11. The middle frame 20 includes two side frames 221 (that is, a left side frame 221a and a right side frame 221b) arranged opposite to each other and corresponding to bent areas of the curved screen 10. Each side frame 221 has a bonding end surface 2211 at one end facing toward the curved screen 10. Each bonding end surface 2211 is provided with a limiting structure 30. The two limiting structures 30 are configured to limit two curved sides 121 of the protective cover plate 12 in a horizontal direction (such as an X direction in FIG. 7a to FIG. 7c), thereby limiting the curved screen 10 in the horizontal direction, facilitating bonding of the curved screen 10 and the middle frame 20, and increasing a bonding success rate. There is a gap h between the bonding end surfaces 2211 and curved sides 121 of the protective cover plate 12, and the gap h is filled with a glue 40 for bonding the protective cover plate 12 to the side frames 221 and the limiting structures 30. The glue 40 is configured to achieve a sealed connection between the curved screen 10 and the middle frame 20, so that while the curved screen 10 of the electronic device and the middle frame 20 are bonded, sealing performance is provided, preventing that dust or other debris passing through the gap h to the inside of the electronic device such as a mobile phone 100 affects internal components of the electronic device (such as a circuit board 60). Specifically, in this embodiment, referring to FIG. 4b to FIG. 7c, because the protective cover plate 12 is attached to the top of the display module 11 to form the curved screen 10, this embodiment limits the two curved sides 121 of the protective cover plate 12 by using the limiting structures 30, and the display module 11 and the curved screen 10 may also be limited in a horizontal direction. Compared with the prior art where a curved screen 10 is limited by using a foam back glue 90 (that is, as shown in FIG. 2), in this embodiment, the protective cover plate 12 is limited in the horizontal direction by using the limiting structures 30 on the bonding end surfaces 2211. On one hand, a position shift that occurs when the curved screen 10 is bonded to the middle frame 20 can be avoided, which helps to improve horizontal limiting accuracy and limiting effect for the protective cover plate 12 and the curved screen 10. On the other hand, because the limiting structures 30 have no elasticity, secondary bonding of the glue 40 between the two curved sides 121 of the protective cover plate 12 and the bonding end surfaces 2211 can be avoided, thereby improving bonding strength and bonding effect for the curved screen 10, and increasing a success rate of bonding and a pass rate of the electronic device such as a mobile phone 100 after bonding.

Specifically, in this embodiment, the limiting structures 30 may be integrally formed on the side frames 221 through cutting or welding, or the limiting structures 30 may also be secured on the side frames 221 through clamping or by using fasteners. In this embodiment, a connection manner of the limiting structures 30 and the side frames 221 is not further limited.

It should be noted that the side frames 221 corresponding to bent areas of the curved screen 10 in this embodiment are the left side frame 221a and the right side frame 221b of the middle frame 20, respectively. Both FIG. 7a and FIG. 7c are a partial enlarged view of A₁ part of the electronic device in FIG. 6 such as a mobile phone 100, that is, a partial enlarged view of the left side frame 221a. In this embodiment, for bonding of the curved screen 10 relative to the top frame and bottom frame of the middle frame 20, a bonding method (such as bonding by using a double-sided adhesive tape) in the prior art may be adopted, or bonding by using a glue 40 may be performed after limiting is performed by using the limiting structures 30 of this embodiment of this application. In this embodiment, there is no further limitation.

For example, in this embodiment, the glue 40 may be liquid optical clear adhesive (Liquid Optical Clear Adhesive, LOCA for short) or another curable transparent liquid adhesive (such as a reactive hot melt adhesive), that is, in this embodiment, the glue 40 includes but is not limited to the liquid optical clear adhesive. The liquid optical clear adhesive as a special adhesive for bonding of transparent optical elements is colorlessly transparent (light transmittance above 98%) and has good bonding strength, may be cured at a room temperature or medium temperature, and has the advantages such as low curing shrinkage and yellowing resistance.

It should be understood that in actual application, curing parameters of the glue 40 (for example, fluidity (viscosity), curing time, curing parameters and the like of the glue 40) may be adjusted to enable the glue 40 to adhere to the bonding end surfaces 2211, the two curved sides 121 of the protective cover plate 12 and the limiting structures 30, so that a bonding connection of the protective cover plate 12 and the curved screen 10 to the side frames 221 is stronger. In this embodiment, the curing parameters of the glue 40 are not further limited, provided that the protective cover plate 12 can be bonded to the side frames 221 and the limiting structures 30 by using the glue 40.

In a possible implementation, in this embodiment, the glue 40 may be injected into the gap h through glue dispensing or potting, so that the glue 40 fully fills the gap h and fully connects the two curved sides 121 of the protective cover plate 12 to the bonding end surfaces 2211 and the limiting structures 30. In this embodiment, the glue 40 is cured to form a filling line in the gap h, so as to achieve a sealed connection between the curved screen 10 and the middle frame 20.

In another possible implementation, to achieve a better positioning effect for the curved screen 10, in this embodiment, the two curved sides 121 of the protective cover plate 12 may alternatively be bonded to the limiting structures 30 by using the glue 40, the glue 40 is then injected into the gap h through dispensing or potting, and the curved screen 10 can be more precisely limited in the horizontal direction.

It should be noted that the horizontal direction in this embodiment may be understood as a direction parallel to a short side of the electronic device such as a mobile phone 100, where a short side of the mobile phone 100 may be a side of the mobile phone 100 corresponding to the top frame 22 and the bottom frame 22 of the middle frame 20.

Specifically, in this embodiment, the curved screen 10 is an OLED curved screen or other curved screens that are bendable and have a display function. Correspondingly, the display module 11 may be an OLED display module or made of another flexible material, and has a display unit for function displaying. Because a display area of the display module 11 is a curved surface, to provide a better protection performance for the display module 11, the protective cover plate 12 is correspondingly also a curved cover plate to prevent the display module 11 from being damaged or scratched under the action of an external force, and to extend the life of the display module 11. The protective cover plate 12 in the curved screen 10 of this embodiment is attached to the display module 11 and bent synchronously with the display module 11, so that the protective cover plate 12 and the display module 11 have a better attaching effect and display effect.

It should be understood that, to provide a better protective performance for the display module 11 of the curved screen 10, the protective cover plate 12 should have a size larger than that of the display module 11 and completely cover the display module 11 to protect the display module 11 for comprehensive protection. Specifically, the two curved sides 121 of the protective cover plate 12 should be exposed on the two curved sides (not marked in the figures) of the display module 11. That is, the two curved sides 121 of the protective cover plate 12 should be located outside two bent sides of the display module 11, and the two curved sides of the display module 11 are protected by the protective cover plate 12, while a bonding part capable of being bonded to the side frames 221 is provided for the protective cover plate 12 and the curved screen 10, so that bonding of the protective cover plate 12 or the curved screen 10 on the side frames 221 is facilitated. By arranging the limiting structures 30 on the two side frames 221 of the middle frame 20 according to this embodiment of this application, on one hand, a position shift that occurs when the curved screen 10 is bonded to the middle frame 20 can be avoided, which helps to improve horizontal limiting precision and limiting effect for the protective cover plate 12 and the curved screen 10, and on the other hand, secondary bonding of the glue 40 between the two curved sides 121 of the protective cover plate 12 and the bonding end surfaces 2211 can be avoided, thereby improving bonding strength and bonding effect for the curved screen 10, and increasing a success rate of bonding and a pass rate of the electronic device such as a mobile phone 100 after bonding. In addition, by filling, with the glue 40, the gap h between the bonding end surfaces 2211 and the curved sides 121 of the protective cover plate 12, a sealed connection between the curved screen 10 and the middle frame 20 can be achieved.

Specifically, referring to FIG. 7a and FIG. 7c, the limiting structures 30 have a limiting portion 31 protruding toward the curved screen 10. The limiting portions 31 are located on inner sides of the curved sides 121 of the protective cover 12. In this way, the limiting portions 31 on the two side frames 221 are located on the inner sides of the curved sides 121 of the protective cover plate 12, and movements of the two curved sides 121 of the protective cover plate 12 in the horizontal direction can be avoided, so that limiting the protective cover plate 12 and the curved screen 10 in the horizontal direction can be achieved by using the limiting portions 31 on the two side frames 221, and the curved screen 10 can be well bonded.

Further, referring to FIG. 7a and FIG. 7b, the limiting portions 31 have an inclined surface 311 parallel to an inner surface 1213 of the protective cover plate 12. That is, the inner surface 1213 of the protective cover plate 12 is inclined; a side of the limiting portions 31 opposite to the inner surface 1213 of the protective cover plate 12 (that is, the inclined surface 311) is also inclined. The inner surface 1213 of the protective cover plate 12 is bonded to the inclined surfaces 311 of the limiting portions 31 by using the glue 40. Through arrangement of the inclined surfaces 311 of the limiting portions 31, on one hand, the inclined surfaces can be matched with the inner surface 1213 of the protective cover plate 12, thereby providing better limiting for the protective cover plate 12 and the curved screen 10; and on the other hand, the glue 40 can be evenly filled between the inner surface 1213 of the protective cover plate 12 and the inclined surfaces 311 of the limiting portions 31, thereby improving uniformity of bonding strength between the inner surface 1213 of the protective cover plate 12 and the inclined surfaces 311 of the limiting portions 31, and improving the bonding effect.

Alternatively, as another possible alternative to the inclined surfaces 311 of the foregoing limiting portions 31, the limiting portions 31 have a vertical surface parallel to the inner surface 1213 of the protective cover plate 12 (that is, perpendicular to the side frames 221, such as shown in FIG. 7c). That is, the inner surface 1213 of the protective cover plate 12 is vertical; a side of the limiting portions 31 opposite to the inner surface 1213 of the protective cover plate 12 is also vertical. In this way, a good limiting effect can also be provided for the protective cover plate 12 and the curved screen 10. However, when a side of the limiting portions 31 opposite to the inner surface 1213 of the protective cover plate 12 is a vertical surface, on one hand, requirements on a degree of curvature of the protective cover plate 12 and the curved screen 10 are high, and on the other hand, it is not conductive to filling and flowing of the glue 40 between the inner surface 1213 of the protective cover plate 12 and the limiting portions 31.

It should be noted that, to ensure that there is a gap h between the bonding end surfaces 2211 and the curved sides 121 of the protective cover plate 12, this embodiment may use another auxiliary method to provide the gap h between the bonding end surfaces 2211 and the curved sides 121 of the protective cover plate 12, and then the glue 40 is injected into the gap h through glue dispensing or potting. For example, the inner surface 1213 of the protective cover plate 12 may be bonded to the limiting portions 31 first, and a gap h is provided between the bonding end surfaces 2211 and the two curved sides 121 of the protective cover plate 12 during bonding to carry out subsequent injection of the glue 40. In this embodiment, an auxiliary method for providing the gap h between the bonding end surfaces 2211 and the curved sides 121 of the protective cover plate 12 is not further limited.

In a possible implementation, to provide a gap h between the bonding end surfaces 2211 and the curved sides 121 of the protective cover plate 12, referring to FIG. 7a and FIG. 7c, the limiting structures 30 further include a supporting portion 32. At least some of the supporting portions 32 are located in the gap h, and ends 1211 of the curved sides 121 are bonded to the supporting portions 32 by using the glue 40. In this way, through supporting of the supporting portion 32, on one hand, the gap h can exist between the bonding end surfaces 2211 and the curved sides 121 of the protective cover plate 12 to fill the gap h with the glue 40, thereby achieving a bonded connection between the curved screen 10 and the middle frame 20 at the same time, providing the electronic device with sealing performance, and preventing that dust or other debris entering the electronic device from this gap h affects internal components of the electronic device; on the other hand, because the gap h is limited by a vertical height of the limiting structures 30 (that is, a direction perpendicular to a surface of the mobile phone 100), the protective cover plate 12 and the curved screen 10 can be limited in a vertical direction by using the limiting structures 30.

At least some of the supporting portions 32 are located in the gap h, that is, the supporting portions 32 may be partially located in the gap h, or the supporting portions 32 may be entirely located in the gap h. When the supporting portions 32 are partially located in the gap h (as shown in FIG. 6 and FIG. 7a), there is spacing between the inner surface 1213 of the protective cover plate 12 and the inclined surfaces 311 of the limiting portions 31, and the spacing is filled with the glue 40 so that the inner surface 1213 of the protective cover plate 12 is bonded to the inclined surfaces 311 of the limiting portions 31. Correspondingly, when the supporting portions 32 are all located in the gap h, the inner surface 1213 of the protective cover plate 12 is attached to the inclined surfaces 311 of the limiting portions 31, filling with the glue 40 is performed by using a seam between the inner surface 1213 of the protective cover plate 12 and the inclined surfaces 311 of the limiting portions 31, and bonding is performed. In this embodiment, a positional relationship between the supporting portions 32 and the foregoing gap h is not further limited, provided that it is satisfied that the limiting portions 31 can limit the protective cover plate 12 and can be bonded to the inner surface 1213 of the protective cover plate 12.

It should be understood that in this embodiment, because at least some of the supporting portions 32 are located in the gap h, a size of the gap h is limited by heights of the supporting portions 32, that is, the size of the gap h depends on heights of the supporting portions 32. Therefore, in this embodiment, the protective cover plate 12 and the curved screen 10 can be limited in both horizontal and vertical directions by the limiting structures 30, which provides a better limiting effect. In this embodiment, the size of the gap h and the heights of the supporting portions 32 are not further limited.

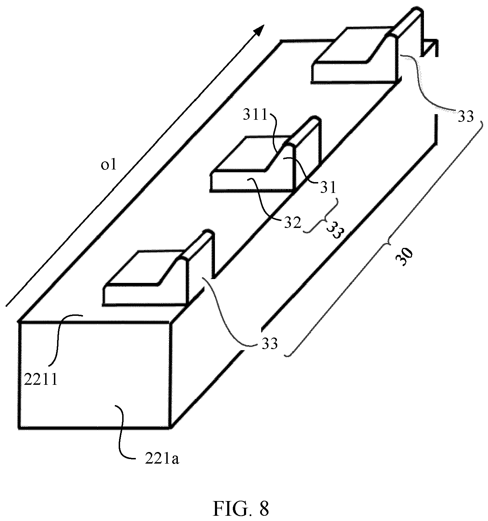

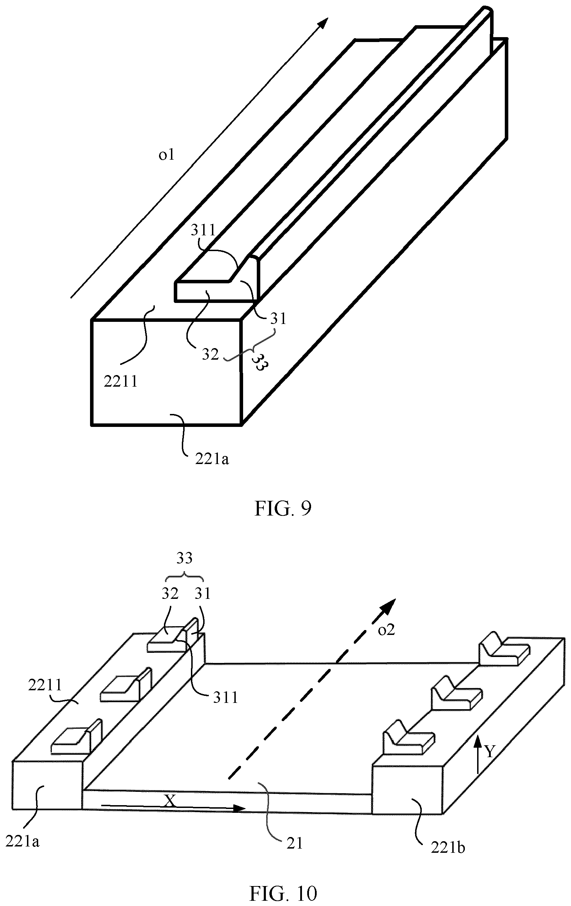

FIG. 8 is a schematic diagram of a limiting structure according to an embodiment of this application, and FIG. 9 is a schematic diagram of another limiting structure according to an embodiment of this application.

The following uses the left side frame 221a as an example to further explain a structure of the limiting structure 30.

In a possible implementation, referring to FIG. 8, in an embodiment of this application, the limiting structure 30 includes a plurality of limiting seats 33 arranged at intervals, and the plurality of limiting seats 33 are arranged in a straight line near a side edge of an inside of an electronic device such as a mobile phone 100 along a bonding end surface 2211. That is, the plurality of limiting seats 33 are discretely arranged on the bonding end surface 2211 along a straight line, and are arranged near a side edge of the inside of the electronic device such as the mobile phone 100. In this way, while limiting for the protective cover plate 12 and the curved screen 10 is achieved, utilization of the bonding end surface 2211 on a side frame 221 can be improved to increase bonding area of the bonding end surface 2211 relative to two curved sides 121 of a protection cover plate 12, thereby improving the bonding effect.

Alternatively, in another possible implementation, referring to FIG. 9, in an embodiment of this application, a limiting structure 30 is a limiting seat 33 in a bar shape. The limiting seat 33 extends along one end of a bonding end surface 2211 to the other end of the bonding end surface 2211, that is, an extending direction of the bar-shaped limiting seat 33 is parallel to an axis o1 direction of the side frame 221. Similar to the plurality of limiting seats 33 arranged at intervals, the limiting seat 33 in the bar shape in an embodiment of this application is arranged near the bonding end surface 2211 and near a side edge of the inside of an electronic device. While limiting for a protective cover plate 12 and a curved screen 10 is achieved, bonding area of the bonding end surface 2211 relative to two curved sides 121 of the protection cover plate 12 can be increased, thereby improving the bonding effect.

In this way, through arrangement of the limiting seat 33 on the bonding end surface 2211, on one hand, the protective cover plate 12 and the curved screen 10 can be limited in both horizontal and vertical directions, which provides a better limiting effect, and on the other hand, while bonding area of the bonding end surface 2211 relative to two curved sides 121 of the protective cover plate 12 can be increased, a more diverse arrangement mode is provided for the limiting structure 30. In this embodiment, the arrangement of the limiting structure 30 is not further limited, provided that the limiting structure 30 can limit the protective cover plate 12 and the curved screen 10 in both horizontal and vertical directions, and enables a gap h to exist between the bonding end surface 2211 and two curved sides 121 of the protective cover plate 12.

It should be noted that in this embodiment of this application, two limiting structure 30 may be arranged symmetrically on bonding end surfaces 2211 on two side frames 221, or arranged asymmetrically on the two side frames 221. For example, the two side frames 221 may be provided with two left and right symmetrically arranged limiting structures 30, the limiting structures 30 may be a plurality of foregoing limiting seat 33, or the limiting structures 30 may be the foregoing bar-shaped limiting seat 33. In another possible asymmetrical arrangement mode, the limiting structure 30 on one side frame 221 may be the plurality of foregoing limiting seats 33 arranged at intervals, while the limiting structure 30 on the other side frame 221 can be the foregoing bar-shaped limiting seat 33. In this embodiment, the arrangement of the limiting structures 30 on the two side frames 221 are not further limited.

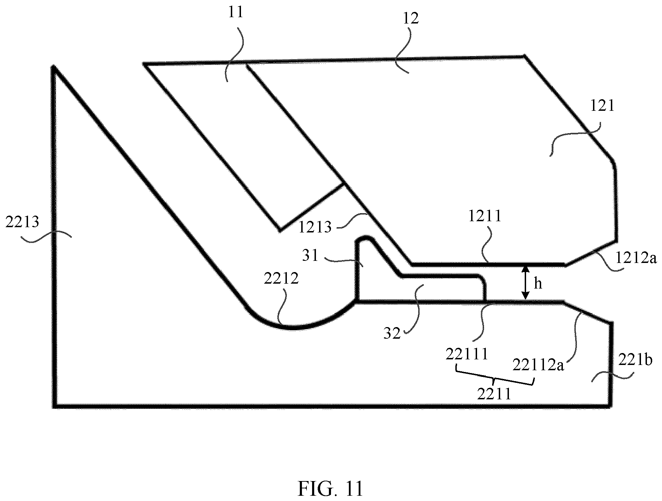

FIG. 10 is a partial schematic diagram of a middle frame according to an embodiment of this application, and FIG. 11 is a partial enlarged view of A₂ part of an electronic device in FIG. 6 according to an embodiment of this application.

As shown in FIG. 10 and FIG. 11, in this embodiment, the limiting structure 30 on one side frame 221 and the limiting structure 30 on the other side frame 221 are symmetrically arranged. That is, the limiting structure 30 on the right side frame 221b and the limiting structure 30 on the left border 221a are symmetrically arranged, that is, the limiting structure 30 on the right border 221b and the limiting structure 30 on the left side frame 221a are of an axially symmetric structure relative to a center axis o2 of a middle frame 20. In this way, a protective cover plate 12 and a curved screen 10 can be limited in both horizontal (such as a direction X in FIG. 10) and vertical (such as a direction Y in FIG. 10) directions by using the symmetrically arranged limiting structures 30 on the two side frames 221.

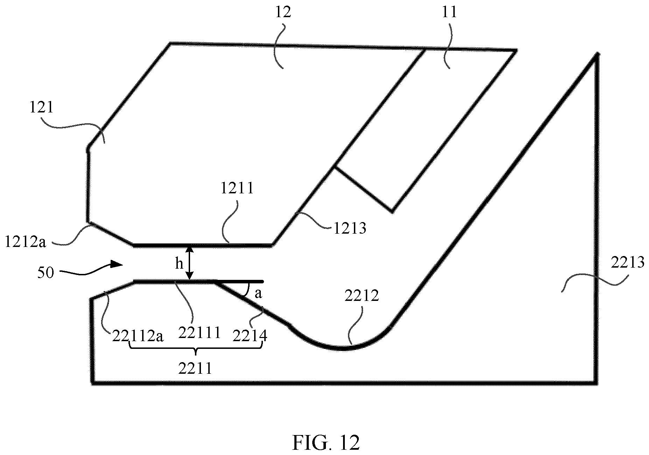

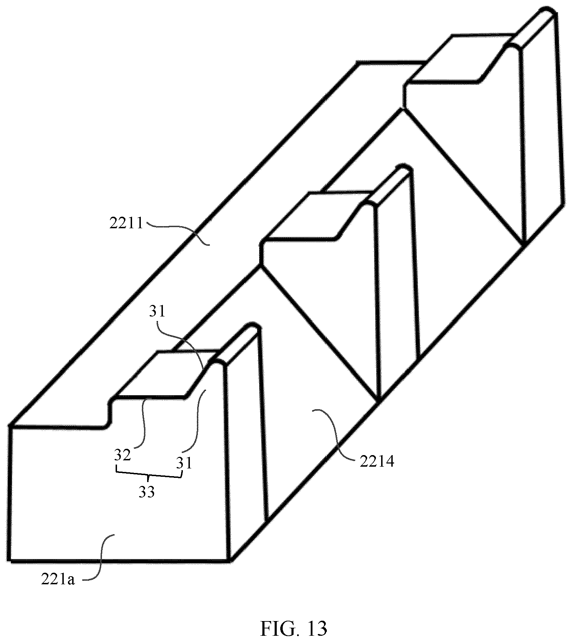

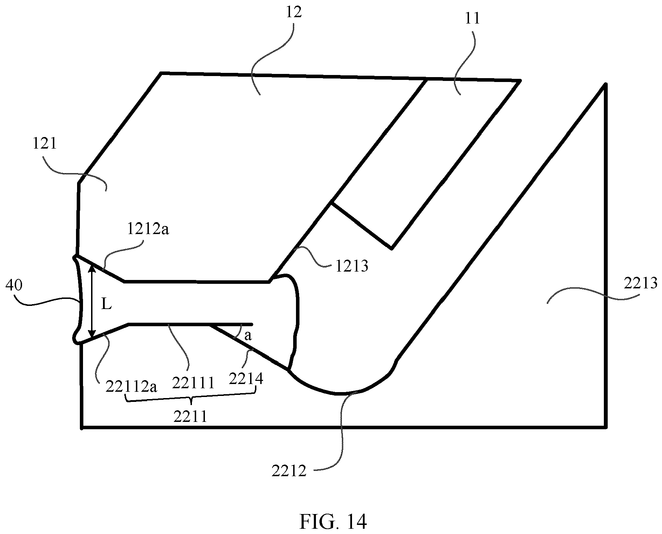

FIG. 12 is a partial enlarged view of A₁ part of another electronic device in FIG. 6 according to an embodiment of this application, FIG. 13 is a schematic diagram of another limiting structure according to an embodiment of this application, and FIG. 14 is a schematic structural diagram of an electronic device in FIG.12 after glue dispensing according to an embodiment of this application. To avoid overflowing of a glue 40 that fills a gap h, as shown in FIG. 12 to FIG. 14, an end of a side frame 221 facing toward the curved screen 10 is provided with a groove 2212. A groove wall of the groove 2212 is connected to a bonding end surface 2211 so that the excess glue 40 in the gap h can overflow into the groove 2212, and poor appearance of an electronic device such as a mobile phone 100 due to overflowing of the glue 40 is avoided.

It should be noted that, as shown in FIG. 12 to FIG. 14, in this embodiment, the bonding end surface 2211 in an end surface for bonding that forms on a side of the side frame 221 far away from the inside of the electronic device such as a mobile phone 100, where the bonding end surface 2211 forms a glue dispensing platform on the side frame 221. In a possible implementation, the side frame 221 is also provided with a supporting protrusion 2213 located on the inner side of the bonding end surface 2211 and facing toward the curved screen 10, the groove 2212 is located between the bonding end surface 2211 and the supporting protrusion 2213, and the supporting protrusion 2213 on one hand can play a supporting role for the curved screen 10, and on the other hand can avoid the excess glue 40 in the gap h entering the electronic device such as a mobile phone 100 and contaminating other electronic components in the mobile phone 100. Alternatively, the top of this supporting protrusion 2213 may also be a plane structure. In this case, the top of the supporting protrusion 2213 may be higher than an end of the groove 2212 to play a supporting role for the curved screen 10. Also, the excess glue 40 in the gap h can be avoided entering the electronic device such as a mobile phone 100 and contaminating other electronic components in the mobile phone 100.

Because the limiting structures 30 protrude from the bonding end surface 2211, the glue 40 will overflow during glue dispensing or potting. To this end, as shown in FIG. 12 and FIG. 14, the bonding end surface 2211 according to an embodiment of this application is provided with an inclined counter groove 2214. The inclined counter groove 2214 includes an inclined groove wall (not marked in the figures) inclined toward the groove 2212, two ends of the inclined groove wall are connected to the groove wall (not marked in the figures) of groove 2212 and the bonding end surface 2211. In this way, through arrangement of the inclined counter groove 2214, on one hand, the excess glue 40 during glue dispensing can overflow to the inclined groove wall and into the groove 2212, so that damage to appearance of an electronic device 100 such as a mobile phone due to the excess glue 40 during glue dispensing is avoided, and on the other hand, because a length of an inclined side is greater than that of a horizontal side, the arrangement of the inclined counter groove 2214 on the bonding end surface 2211 enables a length of the bonding end surface 2211 to be increased, so that effective bonding area for bonding on the bonding end surface 2211 is larger, and bonding strength and reliability between two curved sides 121 of the protective cover plate 12 and the side frames 221 are improved.

As shown in FIG. 12 and FIG. 14, in this embodiment, to allow the excess glue 40 during glue dispensing to smoothly overflow into the inclined counter groove 2214, the inclined groove wall of the inclined counter wall 2214 has a smaller inclination angle relative to the bonding end surface 2211, and the inclined groove wall has a smaller inclination degree relative to the bonding end surface 2211. For example, an angle a between the inclined groove wall of the inclined counter groove 2214 and a reverse extension line of the bonding end surface 2211 in the horizontal direction (that is, a horizontal surface 22111) is greater than or equal to 15 degrees and less than or equal to 45 degrees.

Specifically, as shown in FIG. 13, the limiting structure 30 includes a plurality of limiting seats 33 of discrete type. For example, an inclined counter groove 2214 may be arranged on the bonding end surface 2211 between the adjacent two limiting seats 33, or an inclined counter groove 2214 may be arranged on the bonding end surface 2211 every several limiting seats 33. Correspondingly, when the limiting structure 30 is one limiting seat 33 in a bar shape, and one or more of the above inclined counter grooves 2214 may be cut on the limiting seat 33 in the bar shape. In this embodiment, an arrangement mode of the inclined counter grooves 2214 is not further limited. In a possible implementation, as shown in FIG. 14, in this embodiment, a side of the bonding end surface 2211 near the outer side of a side frame 221 has a first inclined surface 22112a, and the first inclined surface 22112a is inclined in a direction facing away from a protective cover plate 12 direction tilt, that is, the first inclined surface 22112a is an inclined surface that is inclined in a direction facing towards a back cover 80 of an electronic device, so that spacing L between outer sides of two curved sides 121 of the protective cover plate 12 and outer sides of the side frames 221 is large, and the curved screen 10 can be bonded to the side frames 221 through glue dispensing or potting.

Further, as shown in FIG. 14, in this embodiment, the protective cover plate 12 has a second inclined surface 1212a facing toward the bonding end surface 2211 and opposite to the first inclined surface 22112a, and the second inclined surface 1212a is inclined in a direction facing away from the bonding end surface 2211. In this way, the second inclined surface 1212a and the first inclined surface 22112a form a glue-feeding seam 50 on a side of an electronic device such as a mobile phone 100. A width of the glue-feeding seam 50 decreases gradually in a direction facing toward the inside of the electronic device, so that the curved screen 10 can be bonded to the side frames 221 conveniently through glue dispensing or potting, and a glue 40 can be avoided flowing too fast in the glue-feeding seam 50. It should be understood that after the glue 40 is injected, by using the glue-feeding seam 50, to bond the protective cover 12 to the side frames 221 and after the glue 40 cures, a filling line is formed at the glue-feeding seam 50 (not indicated in the figure).

It should be noted that, as shown in FIG. 14, in this embodiment, the limiting structure 30 is located on a horizontal surface 22111 of the bonding end surface 2211, and this horizontal surface 22111 is higher than the first inclined surface 22112a and the inclined counter groove 2214. In this embodiment, inclination angles of the first inclined surface 22112a and the second inclined surface 1212a are not further limited, and based on implementing of glue dispensing or potting, the smaller the inclination angles of the first inclined surface 22112a and the second inclined surface 1212a, the better.

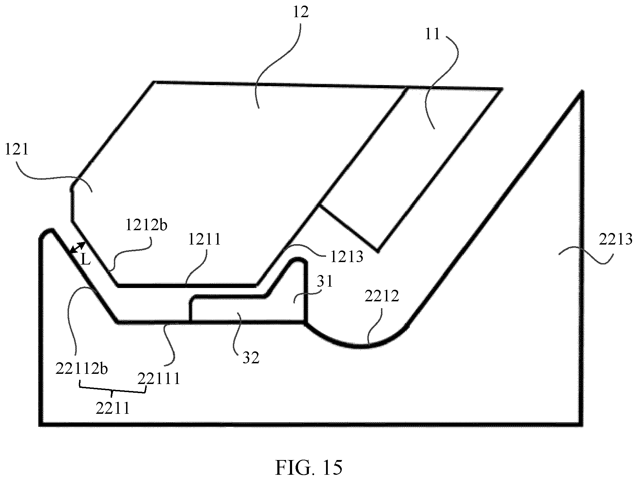

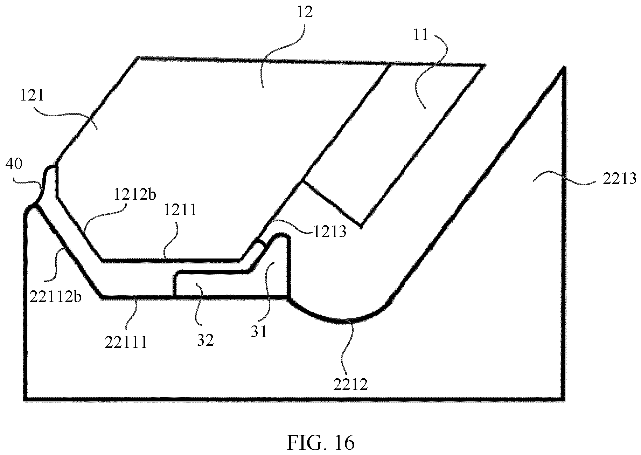

FIG. 15 is a partial enlarged view of A₁ part of another electronic device in FIG. 6 according to an embodiment of this application, and FIG. 16 a schematic structural diagram of an electronic device in FIG. 15 after glue dispensing according to an embodiment of this application.

In another possible implementation, as shown in FIG. 15 and FIG. 16, a side of the bonding end surface 2211 near the outer side of the side frame 221 has a third inclined surface 22112b, the third inclined surface 22112b is inclined in a direction facing toward the protective cover plate 12, and the protective cover plate 12 has a fourth inclined surface 1212b bonded to the third inclined surface 22112b. The fourth inclined surface 1212b and the third inclined surface 22112b are parallel to each other. In this way, spacing L between outer sides of two curved sides 121 of the protective cover plate 12 and outer sides of the side frames 221 is small, so that an electronic device such as a mobile phone 100 has a better appearance. In addition, the fourth inclined surface 1212b and the third inclined surface 22112b form a glue-feeding seam 50 for the electronic device such as a mobile phone 100. A glue 40 is injected by using the glue-feeding seam 50, so that the protective cover plate 12 and the curved screen 10 are bonded. After the glue 40 cures, a filling line (not marked in the figures) is formed at the glue-feeding seam 50. In actual application, the inclination angle of the third inclined surface 22112b can be adjusted correspondingly based on an actual situation. In this embodiment, the inclination angle of the third inclined surface 22112b is not further limited, provided that it is ensured that the third inclined surface 22112b is inclined in a direction facing towards the protective cover plate 12. It should be noted that based on limiting the protective cover plate 12 and the curved screen 10 and bonding the protective cover plate 12 to the side frames 221, the smaller the spacing L, the better the appearance of the electronic device. It should be understood that, as shown in FIG. 15 and FIG. 16, the limiting structure 30 is located on the horizontal surface 22111 of the bonding end surface 2211. Because the third inclined surface 22112b is inclined in a direction facing toward the protective cover plate 12, two curved sides 121 of the protective cover plate 12 are located partially within the side frames 221 and are bonded to the limiting structures 30 on the bonding end surfaces 2211 and the side frames 221.

Specifically, in this embodiment, the curved screen 10 may be a 3D curved screen, so that with respect to a common mobile phone 100 having a flat (that is, 2D) screen, an electronic device such as a mobile phone 100 has a more three-dimensional appearance, looks more dynamic and beautiful, but also has grip comfort improved to a degree, and has a better hand feeling.

Correspondingly, the protective cover plate 12 may be a 3D curved glass cover plate or a 3D curved cover plate made with other transparent materials, that is, the protective cover plate 12 in this embodiment includes but is not limited to a 3D curved glass cover plate. Compared to a 2D flat glass cover plate, the 3D curved glass cover plate has a better protection effect for the display module 11, avoiding damage to the display module 11 caused by accidental slip of the electronic device such as a mobile phone 100.

It should be noted that in this embodiment, the 3D curved screen is arced both in the middle and in the edge.

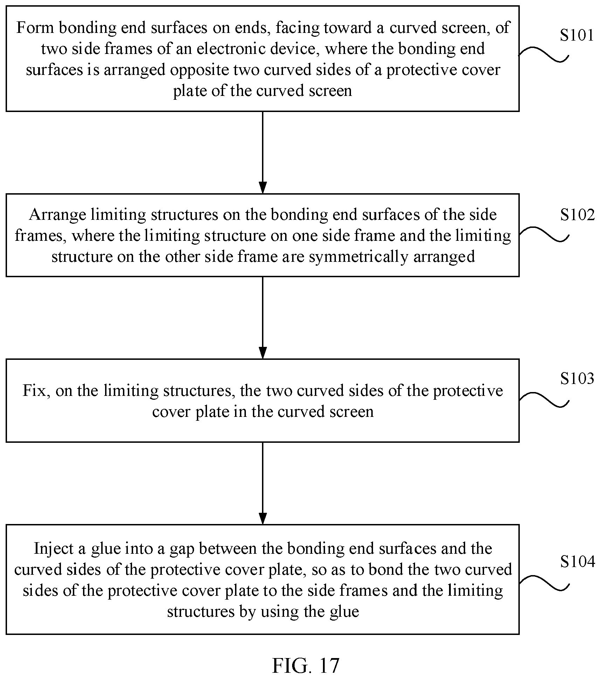

FIG. 17 is a schematic flowchart of a bonding method for a screen according to an embodiment of this application.

Based on the foregoing description, as shown in FIG. 17, an embodiment of this application further provides a bonding method for a screen, including the following specific steps:
S101: Form bonding end surfaces 2211 on ends, facing toward a curved screen 10, of two side frames 221 of an electronic device, where the bonding end surfaces 2211 are arranged opposite to two curved sides 121 of a protective cover plate 12 of the curved screen 10.
S102: Arrange the limiting structures 30 on the bonding end surfaces 2211 of the side frames 221, where the limiting structure 30 on one side frame 221 and the limiting structure 30 on the other side frame 221 are symmetrically arranged.
S103: Fix, on the limiting structures 30, the two curved sides 121 of the protective cover plate 12 in the curved screen 10.
S104: Inject a glue 40 into a gap h between the bonding end surfaces 2211 and the curved sides 121 of the protective cover plate 12, so as to bond the two curved sides 121 of the protective cover plate 12 to the side frames 221 and the limiting structures 30 by using the glue 40.

In this way, compared with the prior art where a curved screen 10 is limited by using a foam back glue 90 (that is, as shown in FIG. 2), an embodiment of this application enables the two curved sides 121 of the protective cover plate 12 in the horizontal direction by using the limiting structures 30 upon bonding of the curved screen 10. On one hand, a position shift that occurs when the curved screen 10 is bonded to the middle frame 20 can be avoided, which helps to improve horizontal limiting precision and limiting effect (that is, the limiting structures 30 have no elasticity) for the protective cover plate 12 and the curved screen 10. On the other hand, secondary bonding of the glue 40 between the two curved sides 121 of the protective cover plate 12 and the bonding end surfaces 2211 can be avoided, thereby improving bonding strength and bonding effect for the curved screen 10, and increasing a success rate of bonding and a pass rate of an electronic device such as a mobile phone 100 after bonding.

Specifically, in this embodiment, a method for forming the bonding end surfaces 2211 on the ends, facing toward the curved screen 10, of the two side frames 221 of the electronic device includes:
first, forming horizontal surfaces 22111 of the bonding end surfaces 2211 on ends, facing toward the curved screen 10, of the two side frames 221 of the electronic device, where the horizontal surfaces 22111 are arranged opposite to the two curved sides 121 of the protective cover plate 12; and
then, forming on the outer sides of the horizontal surfaces 22111, first inclined surfaces 22112a or third inclined surfaces 22112b of the bonding end surfaces 2211. In this way, a bonding platform where the two curved sides 121 of the protective cover plate 12 are bonded to the side frames 221 is formed.

Specifically, in this embodiment, a method for fixing, on the limiting structures 30, the two curved sides 121 of the protective cover plate 12 in the curved screen 10 may include:
Arranging the two curved sides 121 of the protective cover plate 12 on the limiting structures 30, so that while the two curved sides 121 of the protective cover plate 12 are limited in the horizontal direction, a gap h exists between the bonding end surfaces 2211 and the two curved sides 121 of the protective cover plate 12, thereby facilitating injection of the glue 40 in subsequent steps.

Further, a bonding end surface 2211 may be provided with an inclined counter groove 2214 after step S102 and before step S103, an inclined groove wall of the inclined counter groove 2214 is inclined toward the groove 2212, and two ends of the inclined groove wall are connected to a groove wall of the groove 2212 and the bonding end surface 2211, respectively, where the groove 2212 is arranged at one end of a side frame 221 facing toward the curved screen 10. In this way, through arrangement of the inclined counter groove 2214, on one hand, the excess glue 40 during glue dispensing can overflow to the inclined groove wall and into the groove 2212, so that damage to appearance of an electronic device such as a mobile phone 100 due to the excess glue 40 during glue dispensing is avoided, and on the other hand, because a length of an inclined side is greater than that of a horizontal side, the arrangement of the inclined counter groove 2214 enables a length of the bonding end surface 2211 to be increased, so that effective bonding area for bonding on the bonding end surface 2211 is larger, and bonding strength and reliability between two curved sides 121 of the protective cover plate 12 and the side frames 221 are improved.

By arranging the limiting structures on the two side frames of the middle frame according to this application, horizontal limiting precision and limiting effect for the protective cover plate and the curved screen can be improved, thereby improving bonding strength and bonding effect for the curved screen, and increasing a success rate of bonding.

In the descriptions of the embodiments of this application, it should be noted that unless otherwise specified and defined explicitly, the terms "mount", "connected to" and "connect" should be understood broadly, and for example, may be a fixed connection or an indirect connection by using an intermediate medium, and may be internal communication between two elements or an interaction relationship of two elements. A person of ordinary skill in the art can understand specific meanings of these terms in the embodiments of this application based on specific situations.

In the specification of embodiments, claims, and accompanying drawings of this application, the terms "first", "second", "third", "fourth", and the like (if existent) are intended to distinguish between similar objects but do not necessarily indicate a specific order or sequence.

## Claims

1. An electronic device (100), comprising a middle frame (20) and a curved screen (10), wherein the curved screen comprises a display module (11) and a protective cover plate (12) attached to the display module; and
the middle frame (20) comprises two side frames (221) arranged opposite to each other and arranged to correspond to bent areas of the curved screen (10), an end of each side frame facing toward the curved screen has a bonding end surface (2211), each bonding end surface is provided with a limiting structure (31) having no elasticity, the two limiting structures are configured to limit two curved sides (121) of the protective cover plate in a horizontal direction, a gap (h) is present between the bonding end surfaces and the curved sides (2211) of the protective cover plate (12), and the gap is filled with a glue bonding the protective cover plate to the side frames and the limiting structures; wherein the limiting structures (30) comprise limiting portions (31) located on inner sides of the curved sides (2211) of the protective cover plate (12), wherein the limiting portions (31) project toward the curved screen; and wherein the limiting structures (30) further comprise a supporting portion (32), at least a part of the supporting portion is located in the gap, and ends of the curved sides of the protective cover plate are bonded to the supporting portions by using the glue.

2. The electronic device according to claim 1, wherein the limiting portions (31) have an inclined surface (311) parallel to an inner surface of the protective cover plate, the inner surface of the protective cover plate is bonded to the inclined surfaces of the limiting portions by using the glue.

3. The electronic device according to any one of claims 1 to 2, wherein the side frames have a groove (2212) on one end facing the curved screen, and a groove wall of the groove is connected to the bonding end surface.

4. The electronic device according to claim 3, wherein the bonding end surfaces are provided with an inclined counter groove (2214), the inclined counter groove comprises an inclined groove wall that is inclined toward the groove, and two ends of the inclined groove wall are respectively connected to the groove wall of the groove and the bonding end surface.

5. The electronic device according to any one of claims 1 to 4, wherein a side of the bonding end surfaces near outer sides of the side frames has a first inclined surface (22112a), and the first inclined surface is inclined in a direction facing away from the protective cover plate.

6. The electronic device according to claim 5, wherein the protective cover plate has a second inclined surface facing toward the bonding end surfaces and opposite to the first inclined surface, and the second inclined surface is inclined in a direction facing away from the bonding end surfaces.

7. The electronic device according to any one of claims 1 to 4, wherein a side of the bonding end surfaces near the outer sides of the side frames has a third inclined surface (22112b), the third inclined surface is inclined in a direction facing toward the protective cover plate, and the protective cover has a fourth inclined surface bonded to the third inclined surface.

8. The electronic device according to any one of claims 1 to 7, wherein
the limiting structure comprises a plurality of limiting seats (33) arranged at intervals, and the plurality of limiting seats are arranged in a straight line near a side edge of an inside of the electronic device along the bonding end surface; or,
the limiting structures comprise a limiting seat (33) in a bar shape that extends along one end of the bonding end surfaces to the other end of the bonding end surfaces.

9. The electronic device according to any one of claims 1 to 8, wherein the limiting structure on one side frame and the limiting structure on the other side frame are arranged symmetrically.

10. The electronic device according to any one of claims 1 to 9, wherein the curved screen is a 3D curved screen, and the protective cover plate is a 3D curved glass cover plate.

## Patentansprüche

1. Elektronische Vorrichtung (100), umfassend einen mittleren Rahmen (20) und einen gekrümmten Bildschirm (10), wobei der gekrümmte Bildschirm ein Anzeigemodul (11) und eine Schutzabdeckungsplatte (12) umfasst, die an dem Anzeigemodul angebracht ist; und
der mittlere Rahmen (20) zwei Seitenrahmen (221) umfasst, die einander gegenüberliegend angeordnet sind und angeordnet sind, um gebogenen Bereichen des gekrümmten Bildschirms (10) zu entsprechen, wobei ein Ende jedes Seitenrahmens, das dem gekrümmten Bildschirm zugewandt ist, eine Verbindungsendoberfläche (2211) aufweist, wobei jede Verbindungsendoberfläche mit einer Begrenzungsstruktur (31) versehen ist, die keine Elastizität aufweist, wobei die zwei Begrenzungsstrukturen konfiguriert sind, um zwei gekrümmte Seiten (121) der Schutzabdeckungsplatte in einer horizontalen Richtung zu begrenzen, ein Spalt (h) zwischen den Verbindungsendoberflächen und den gekrümmten Seiten (2211) der Schutzabdeckungsplatte (12) vorhanden ist, und der Spalt mit einem Klebstoff gefüllt ist, der die Schutzabdeckungsplatte mit den Seitenrahmen und den Begrenzungsstrukturen verbindet; wobei die Begrenzungsstrukturen (30) Begrenzungsabschnitte (31) umfassen, die sich auf Innenseiten der gekrümmten Seiten (2211) der Schutzabdeckungsplatte (12) befinden, wobei die Begrenzungsabschnitte (31) zu dem gekrümmten Bildschirm hin vorstehen; und wobei die Begrenzungsstrukturen (30) ferner einen Stützabschnitt (32) umfassen, wobei sich mindestens ein Teil des Stützabschnitts in dem Spalt befindet, und Enden der gekrümmten Seiten der Schutzabdeckungsplatte durch Verwenden des Klebstoffs mit den Stützabschnitten verbunden sind.

2. Elektronische Vorrichtung nach Anspruch 1, wobei die Begrenzungsabschnitte (31) eine geneigte Oberfläche (311) parallel zu einer Innenoberfläche der Schutzabdeckungsplatte aufweisen, wobei die Innenoberfläche der Schutzabdeckungsplatte durch Verwenden des Klebstoffs mit den geneigten Oberflächen der Begrenzungsabschnitte verbunden ist.

3. Elektronische Vorrichtung nach einem der Ansprüche 1 bis 2, wobei die Seitenrahmen auf einem Ende, das dem gekrümmten Bildschirm zugewandt ist, eine Nut (2212) aufweisen und eine Nutwand der Nut mit der Verbindungsendoberfläche verknüpft ist.

4. Elektronische Vorrichtung nach Anspruch 3, wobei die Verbindungsendoberflächen mit einer geneigten Gegennut (2214) versehen sind, die geneigte Gegennut eine geneigte Nutwand umfasst, die zu der Nut hin geneigt ist, und zwei Enden der geneigten Nutwand jeweils mit der Nutwand der Nut und der Verbindungsendoberfläche verknüpft sind.

5. Elektronische Vorrichtung nach einem der Ansprüche 1 bis 4, wobei eine Seite der Verbindungsendoberflächen nahe Außenseiten der Seitenrahmen eine erste geneigte Oberfläche (22112a) aufweist und die erste geneigte Oberfläche in einer Richtung geneigt ist, die von der Schutzabdeckungsplatte abgewandt ist.

6. Elektronische Vorrichtung nach Anspruch 5, wobei die Schutzabdeckungsplatte eine zweite geneigte Oberfläche aufweist, die zu den Verbindungsendoberflächen hin und gegenüber der ersten geneigten Oberfläche gewandt ist, und die zweite geneigte Oberfläche in einer Richtung geneigt ist, die von den Verbindungsendoberflächen abgewandt ist.

7. Elektronische Vorrichtung nach einem der Ansprüche 1 bis 4, wobei eine Seite der Verbindungsendoberflächen nahe den Außenseiten der Seitenrahmen eine dritte geneigte Oberfläche (22112b) aufweist, die dritte geneigte Oberfläche in einer Richtung geneigt ist, die zu der Schutzabdeckungsplatte hin gewandt ist, und die Schutzabdeckung eine vierte geneigte Oberfläche aufweist, die mit der dritten geneigten Oberfläche verbunden ist.

8. Elektronische Vorrichtung nach einem der Ansprüche 1 bis 7, wobei die Begrenzungsstruktur eine Vielzahl von Begrenzungssitzen (33) umfasst, die in Abständen angeordnet ist, und die Vielzahl von Begrenzungssitzen in einer geraden Linie nahe einer Seitenkante eines Inneren der elektronischen Vorrichtung entlang der Verbindungsendoberfläche angeordnet ist; oder,
die Begrenzungsstrukturen einen Begrenzungssitz (33) in einer Stabform umfassen, der sich entlang eines Endes der Verbindungsendoberflächen zu dem anderen Ende der Verbindungsendoberflächen erstreckt.

9. Elektronische Vorrichtung nach einem der Ansprüche 1 bis 8, wobei die Begrenzungsstruktur auf einem Seitenrahmen und die Begrenzungsstruktur auf dem anderen Seitenrahmen symmetrisch angeordnet sind.

10. Elektronische Vorrichtung nach einem der Ansprüche 1 bis 9, wobei der gekrümmte Bildschirm ein 3D-gekrümmter Bildschirm ist und die Schutzabdeckungsplatte eine 3D-gekrümmte Glasabdeckungsplatte ist.

## Revendications

1. Dispositif électronique (100), comprenant un cadre médian (20) et un écran incurvé (10), dans lequel l'écran incurvé comprend un module d'affichage (11) et une plaque de couverture de protection (12) fixée au module d'affichage ; et
le cadre médian (20) comprend deux cadres latéraux (221) disposés à l'opposé l'un de l'autre et agencés pour correspondre à des zones courbées de l'écran incurvé (10), une extrémité de chaque cadre latéral faisant face à l'écran incurvé a une surface d'extrémité de liaison (2211), chaque surface d'extrémité de liaison est pourvue d'une structure de limitation (31) ayant aucune élasticité, les deux structures de limitation sont conçues pour limiter deux côtés incurvés (121) de la plaque de couverture de protection dans un sens horizontal, un espace (h) est présent entre les surfaces d'extrémité de liaison et les côtés incurvés (2211) de la plaque de couverture de protection (12), et l'espace est rempli d'une colle liant la plaque de couverture de protection aux cadres latéraux et aux structures de limitation ; dans lequel les structures de limitation (30) comprennent des parties de limitation (31) situées sur des côtés intérieurs des côtés incurvés (2211) de la plaque de couverture de protection (12), dans lequel les parties de limitation (31) font saillie vers l'écran incurvé ; et dans lequel les structures de limitation (30) comprennent en outre une partie de support (32), au moins une portion de la partie de support est située dans l'espace, et des extrémités des côtés incurvés de la plaque de couverture de protection sont liées aux parties de support en utilisant la colle.

2. Dispositif électronique selon la revendication 1, dans lequel les parties de limitation (31) ont une surface inclinée (311) parallèle à une surface interne de la plaque de couverture de protection, la surface interne de la plaque de couverture de protection est liée aux surfaces inclinées des parties de limitation en utilisant la colle.

3. Dispositif électronique selon l'une quelconque des revendications 1 à 2, dans lequel les cadres latéraux ont une rainure (2212) sur une extrémité faisant face à l'écran incurvé, et une paroi de rainure de la rainure est reliée à la surface d'extrémité de liaison.

4. Dispositif électronique selon la revendication 3, dans lequel les surfaces d'extrémité de liaison sont pourvues d'une contre-rainure inclinée (2214), la contre-rainure inclinée comprend une paroi de rainure inclinée qui est inclinée vers la rainure, et deux extrémités de la paroi de rainure inclinée sont respectivement reliées à la paroi de rainure de la rainure et à la surface d'extrémité de liaison.

5. Dispositif électronique selon l'une quelconque des revendications 1 à 4, dans lequel un côté des surfaces d'extrémité de liaison près des côtés extérieurs des cadres latéraux a une première surface inclinée (22112a), et la première surface inclinée est inclinée dans un sens opposé à la plaque de couverture de protection.

6. Dispositif électronique selon la revendication 5, dans lequel la plaque de couverture de protection a une deuxième surface inclinée tournée vers les surfaces d'extrémité de liaison et opposée à la première surface inclinée, et la deuxième surface inclinée est inclinée dans un sens opposé aux surfaces d'extrémité de liaison.

7. Dispositif électronique selon l'une quelconque des revendications 1 à 4, dans lequel un côté des surfaces d'extrémité de liaison près des côtés extérieurs des cadres latéraux a une troisième surface inclinée (22112b), la troisième surface inclinée est inclinée dans un sens tourné vers la plaque de couverture de protection, et la couverture de protection a une quatrième surface inclinée liée à la troisième surface inclinée.

8. Dispositif électronique selon l'une quelconque des revendications 1 à 7, dans lequel la structure de limitation comprend une pluralité de sièges de limitation (33) agencés à intervalles, et la pluralité de sièges de limitation sont agencés en une ligne droite près d'un bord latéral d'un intérieur du dispositif électronique le long de la surface d'extrémité de liaison ; ou,
les structures de limitation comprennent un siège de limitation (33) en forme de barre qui s'étend le long d'une extrémité des surfaces d'extrémité de liaison à l'autre extrémité des surfaces d'extrémité de liaison.

9. Dispositif électronique selon l'une quelconque des revendications 1 à 8, dans lequel la structure de limitation sur un cadre latéral et la structure de limitation sur l'autre cadre latéral sont agencées symétriquement.

10. Dispositif électronique selon l'une quelconque des revendications 1 à 9, dans lequel l'écran incurvé est un écran incurvé en 3D, et la plaque de couverture de protection est une plaque de couverture en verre incurvée en 3D.
